# FASCICULE DE BREVET EUROPEEN

(11) **EP 2 891 514 B1**
(45) Date de publication et mention de la délivrance du brevet: **02.05.2018**
(21) Numéro de dépôt: 14307223.9
(22) Date de dépôt: 31.12.2014
(51) Int. Cl.: B01D 61/42, C02F 1/469, C02F 103/16, C02F 1/04, C02F 1/42, C02F 1/44

(54) **Procédé et dispositif pour le traitement de saumures**
Verfahren und Vorrichtung zur Behandlung von Salzlösungen
Method and device for treating brines

(30) Priorité: 03.01.2014 FR 1450021
(43) Date de publication de la demande: 08.07.2015
(73) Titulaire: Marcus Invest, 33000 Bordeaux (FR)
(72) Inventeur: Rizet, Laurent Pierre, 74250 Viuz en Sallaz (FR); Marcadier, Eric Michel, 33000 Bordeaux (FR)
(74) Mandataire: Aquinov

(56) Documents cités:
- US-A1- 2010 155 258
- US-A1- 2011 042 230

## Description

La présente invention concerne un procédé et un dispositif pour le traitement de saumures, notamment issues des étapes de traitement de recyclage de boues de haut fourneaux BHF et de poussières d'aciéries électriques PAE.

Ces sous-produits sont actuellement stockés en attendant un traitement de ces sous-produits.

Un traitement de recyclage et de valorisation des sous-produits notamment le zinc et le fer a été proposé à travers la demande de brevet WO 2009/156662.

Ce procédé vise un traitement des boues de haut-fourneaux BHF riches en zinc et des poussières d'aciéries électriques PAE également riches en zinc, la récupération du zinc étant réalisée quelle que soit la forme, oxydes, ferrites tout en débarrassant ces déchets des métaux lourds de façon à pouvoir placer les déchets en décharge classée mais uniquement les déchets ultimes, de volume considérablement réduit.

Le procédé consiste en une double attaque, acide et basique.

Pour l'attaque acide, une partie des PAE est attaquée pour dissoudre le fer, les oxydes de fer et pour briser les ferrites. Le gâteau et le filtrat sont séparés, ce filtrat recevant une seconde quantité de PAE pour assurer une neutralisation.

Une cémentation permet de retirer les métaux autres que le zinc puis une variation du pH permet de précipiter le fer.

Il subsiste une solution acide de zinc.

Pour les BHF, le premier traitement est un lavage pour les désaliniser. Ensuite le traitement est une attaque basique afin d'obtenir une solution basique contenant du zinc. Une électrolyse permet de récupérer le zinc sous forme de poudre.

Enfin, la caractéristique de ce procédé est essentiellement d'introduire la solution acide de l'attaque acide des PAE dans les BHF, en amont de l'attaque basique.

Or les effluents de ces différentes étapes contiennent principalement des ions chlorures et des ions sodium à des teneurs variant entre 5 et 26 g/l pour le sodium et 8 et 26 g/l pour les chlorures.

Une solution pour traiter ces saumures est de recourir à l'électro-électrodialyse, dite aussi électrodialyse à membranes, de cette saumure pour produire de la soude et du chlore.

Le problème est le dégagement de chlore sous forme gazeuse si bien qu'il faut généralement réaliser des installations de très grande capacité, avec un captage du chlore afin de sécuriser et de rendre rentable le traitement des saumures.

Néanmoins, notamment dans le procédé selon l'art antérieur, la production de saumures est trop importante en quantité pour que ces saumures, qui ne sont aucunement toxiques, soient rejetées dans la nature car elles modifieraient la salinité des eaux dans lesquelles elles seraient rejetées, cette modification étant susceptible de porter atteinte aux organismes vivants de ces eaux.

Le but de la présente invention est de proposer de recourir à l'électro-électrodialyse pour produire de la soude mais en évitant le dégagement de chlore préjudiciable à la mise en oeuvre de ce procédé dans le cas d'installation industrielle, plus encore en cas d'unité de petite capacité de traitement.

Le procédé selon la présente invention vise le recours à une anode soluble pour produire un chlorure métallique, l'anode étant une électrode de zinc.

La soude ainsi obtenue peut être utilisée notamment dans le procédé acide/basique de traitement des BHF et PAE indiqué ci-avant et dont sont issues les saumures ainsi traitées.

Cette soude peut être utilisée dans les étapes de lixiviation à condition de pouvoir la concentrer et dans les étapes de neutralisation lorsqu'elle est à plus basse concentration.

Quant au chlorure métallique issu du procédé selon la présente invention, qui est du chlorure de zinc, il peut être valorisé produit chimique de base. Par exemple, il peut être utilisé comme flux de galvanisation, pour le traitement du bois en vue de sa protection, pour la fabrication de piles, de charbons actifs ou comme fondant pour la métallurgie de l'aluminium.

Le document US2011/0042230 A1 décrit un procédé de production d'ions bicarbonate. Le document US2012/0292196 A1 décrit des procédés dans lesquels de la soude et un chlorure métallique peuvent être formés. La présente invention est maintenant décrite en détail en regard des dessins annexés, dessins sur lesquels les différentes figures représentent :
- Figure 1 : une vue schématique d'un dispositif d'électro-électrodialyse ne correspondant pas à l'invention,
- Figure 2 : une vue schématique d'un dispositif d'électro-électrodialyse industriel, à cellule intermédiaire, avec contrôle de température et de pH selon un mode de réalisation de l'invention, et
- Figure 3 : une vue schématique des étapes quantifiées du procédé industriel, dans le cas de la production de chlorure de zinc.

Pour la suite de la description, on a retenu un exemple d'électro-électrodialyse pour le traitement de saumures avec une électrode de zinc.

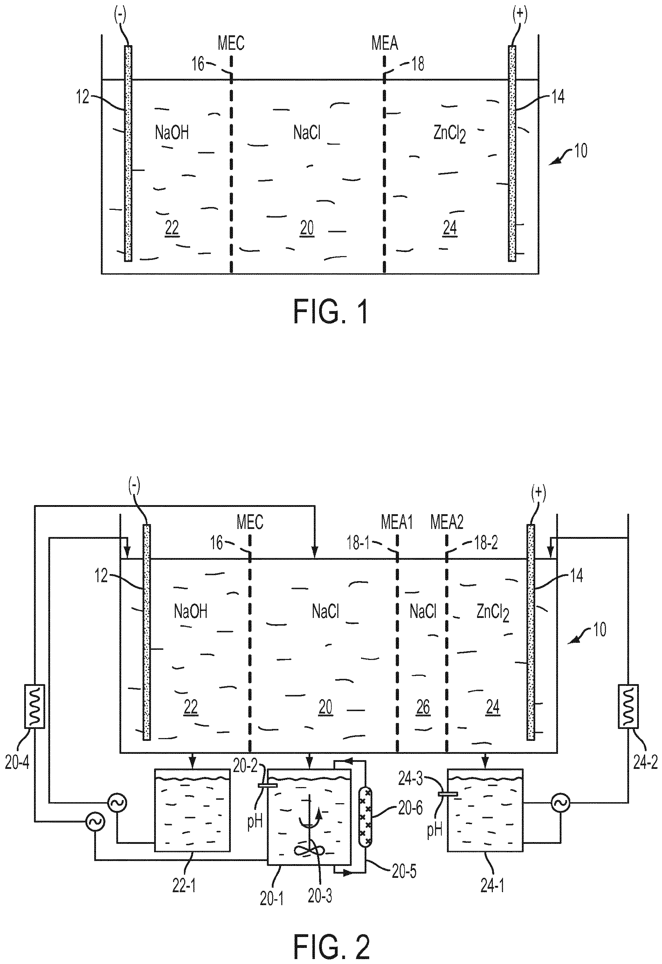

Sur la figure 1, on a représenté une cuve 10 dans laquelle il est disposé une électrode 12 formant cathode et une électrode 14 consommable formant anode.

L'électrode 12 formant cathode est en Inox et l'électrode 14 consommable formant anode est en Zinc.

Dans le bain de saumure, il est disposé deux membranes échanges d'ions la première membrane 16, MEC, est une membrane échangeuse de cations et la deuxième membrane 18, MEA, est une membrane échangeuse d'anions.

On a ainsi défini trois cellules :
- Une première cellule 20 destinée à recevoir la saumure
- Une deuxième cellule 22 destinée à isoler la soude formée, et
- Une troisième cellule 24 destinée à isoler le chlorure de zinc formé.

On peut mentionner des membranes du commerce, utilisables pour cette application comme :
- la membrane NAFION® NX-424 de la société Dupont de Nemours, pour la MEC et
- la membrane AMI-7001 de la société Membranes International INC, pour la MEA

Par émission d'une différence de potentiel entre les électrodes, on obtient ainsi une réaction globale d'électro-électrodialyse qui est la suivante :

Zn + 2 H₂O + 2 NaCl → 2 NaOH + ZnCl₂ + H₂

On récupère donc :
- à la cathode, de la soude issue de la combinaison des ions Na⁺ et des ions OH⁻ issus de la dissociation de l'eau avec formation d'hydrogène H₂ en parallèle, et
- à l'anode, du chlorure de zinc ZnCl₂, issu des ions Cl⁻ provenant de la saumure et des ions Zn²⁺ provenant de la dissolution anodique.

L'électrolyte se modifie au cours de l'électro-électrodialyse car l'anolyte comme le catholyte se concentrent tandis que la concentration de la saumure diminue.

Pour éviter la précipitation du zinc concentré à l'anode, il faut maintenir, selon le procédé de l'invention, le pH à une valeur inférieure au seuil de précipitation du métal considéré, dans le cas du zinc ce seuil est inférieur à 5,5 et de préférence à une valeur pH = 4,0. La valeur doit être, de préférence, inférieure d'au moins une unité à ce seuil de précipitation.

Quant à la partie centrale contenant la saumure à traiter, elle doit être maintenue à pH = 7.

On note aussi que l'on peut retrouver des ions métalliques de zinc dans la cellule contenant le chlorure de sodium du fait de la sélectivité des membranes qui n'est pas intégrale.

Une fraction de ces ions Zn²⁺ migre vers la cathode et donc précipite dans la cellule intermédiaire qui est maintenue à un pH neutre, donc proche de 7,0. Une telle précipitation n'est pas adaptée pour une installation industrielle.

Une solution consiste à capter ces ions zinc au moyen d'une résine échangeuse de cations.

Un autre problème est éventuellement l'émission de chlore dans la cellule de chlorure de zinc.

En effet, il apparaît que, dans le cas d'une densité de courant de l'ordre de 10A/dm², la réaction de formation de chlore gazeux se produit dès que la température atteint plus de 63°C dans la cellule de chlorure de zinc. C'est donc le seuil de dégagement du chlore gazeux dangereux pour les opérateurs comme pour la dégradation des membranes.

Une solution consiste donc à maintenir la température dans la cellule de chlorure de zinc à une température inférieure à 63°C et mieux inférieure à 50°C.

En se reportant au schéma de la figure 2, on constate que, pour limiter le transfert des ions métalliques dans la cellule centrale 20, le dispositif industriel prévoit au moins deux membranes 18-1, 18-2, échangeuses d'ions, anioniques.

Ainsi, le dispositif industriel comprend :
- Une première cellule 20 destinée à recevoir la saumure
- Une deuxième cellule 22 destinée à isoler la soude formée,
- Une troisième cellule 24 destinée à isoler le chlorure de zinc formé, et
- Une quatrième cellule 26 destinée à contenir également de la saumure.

La première cellule 20 contient de la saumure et la saumure est recueillie dans un réservoir 20-1 tampon qui comprend une sonde 20-2 à pH pour mesurer de façon à ajuster le pH dans une fourchette de pH 6 à pH 8, de préférence entre pH 6,5 à 7,5 et de façon encore plus préférentielle à 7,0.

Le réservoir 20-1 tampon comporte, dans le mode de réalisation retenu, des moyens 20-3 agitateur de façon à homogénéiser la concentration de la saumure dans ledit réservoir.

En complément, il est prévu un échangeur thermique 20-4 de façon à maintenir la température une valeur égale à celle de la cellule 24 destinée à recevoir le chlorure de zinc.

Une recirculation 20-5 propre au réservoir 20-1 inclut une résine échangeuse d'ions 20-6 de façon à capter les ions métalliques de zinc. Dans le cas du zinc, cette résine échangeuse d'ions peut recourir à des résines commercialisées sous la référence Amberlite IRC 748.

La saumure, ainsi débarrassée de ces ions métalliques, maintenue à la température adaptée et homogénéisée, est renvoyée dans la première cellule 20 pour subir l'électro-électrodialyse.

La deuxième cellule 22 destinée à isoler la soude ainsi formée comprend un réservoir 22-1 tampon équipé d'une recirculation simple afin d'en contrôler la concentration.

La troisième cellule 24 destinée à isoler le chlorure de zinc doit éviter toute production de chlore gazeux et à cet effet, toujours dans le cas d'une densité de courant de 10A/dm², la température doit être maintenue à un seuil inférieur à 63°C et de préférence à un seuil inférieur à 50°C.

A cet effet, il est prévu un réservoir 24-1 tampon équipé d'un échangeur thermique 24-2. Le pH doit également être maintenu à une valeur inférieure à 5,5 et de préférence à une valeur inférieure à un pH = 4,0. Une sonde 24-3 à pH permet de contrôler le pH et de le maintenir dans la fourchette adaptée assurant ainsi un ajustement dudit pH.

La quatrième cellule 26 est destinée à contenir la saumure sans réservoir tampon et sans recirculation. Elle est comprise entre deux membranes échangeuse d'anions MEA1 et MEA2 identiques.

Cette cellule se trouve donc entre la première cellule 20 contenant la saumure et la troisième cellule 24 destinée à isoler le chlorure de zinc formé.

Le doublement de la membrane échangeuse d'ions permet de limiter le transfert, dit aussi "fuite", des cations métalliques vers la cellule centrale 20. Si la sélectivité de la cellule est 90%, la fuite est de 10% si bien que le doublement de la membrane conduit à limiter la fuite à 10% de 10%, soit seulement 1%.

Afin d'optimiser le procédé selon l'invention, il est prévu de réaliser une concentration préalable de la saumure avant de la placer cette saumure dans la cellule du dispositif selon l'invention, la saumure retenue étant à une concentration de l'ordre de 30 à 40 g/l. Cette concentration peut être obtenue par exemple par osmose inverse, de façon connue, car il apparaît préférable de travailler avec une concentration, en chlorure de sodium supérieure à 100 g/l voire supérieure à 130 g/l.

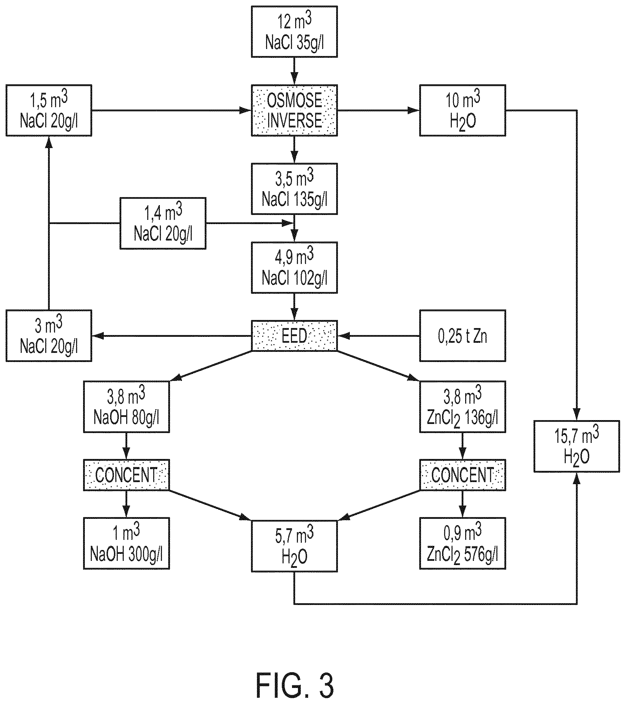

Si l'on procède à cette concentration, on obtient le schéma de la figure 3 qui reflète le procédé selon l'invention susceptible d'être mis en oeuvre grâce au dispositif qui vient d'être décrit.

L'osmose inverse permet de concentrer de la saumure par exemple 12 m³ de saumure à 35 g/l en 10 m³ d'eau et 3,5 m³ de saumure à 135 g/l.

En entrée d'électro-électrodialyse, on traite ces 3,5 m³.

On consomme 0,25 tonne de zinc à l'anode.

On obtient 3,8 m³ de chlorure de zinc à 136 g/l dans la cellule 24.

On obtient 3,8 m³ de soude à 80 g/l dans la cellule 22.

Ces deux solutions peuvent être concentrées par tout moyen notamment par évaporation et on obtient :
- 1 m³ de soude à 300 g/l
- 0,9 m³ de chlorure de zinc à 576 g/l
- 5,7 m³ d'eau qui rejoignent les 10 m³ d'eau issus de l'osmose inverse.

La saumure pauvre en chlorure de sodium, 20 g/l, issue de la cellule 20 centrale est remise en circulation en tête d'électro-électrodialyse avec par exemple :
- une moitié, directement remise en tête d'électro-électrodialyse mélangée avec la saumure concentrée à 135 g/l, si bien que la saumure entrant dans la cellule 20 est alors concentrée à 102 g/l.
- l'autre moitié, ramenée en tête d'osmoseur pour subir une nouvelle concentration par osmose inverse.

Un tel dispositif industriel permet de traiter la saumure issue de procédés industriels, sans dégagement de chlore très dangereux pour les opérateurs et susceptible de dégrader les membranes échangeuses d'ions.

De plus, les membranes restent propres sans être altérées par des dépôts de précipités de zinc.

On note que le recours à une double membrane permet aussi de s'affranchir d'une recirculation de la saumure, recirculation qui reste bénéfique mais non nécessaire.

On note également que l'échangeur peut être prévu sur au moins les réservoirs indiqués mais aussi sur les réservoirs de saumure et/ou de soude.

## Revendications

1. Procédé de traitement d'une saumure comprenant du chlorure de sodium pour produire du chlorure de zinc et de la soude par électro-électrodialyse, **caractérisé en ce qu'**il consiste à réaliser les étapes suivantes :
- Dissocier le chlorure de sodium de ladite saumure, contenue dans une première cellule (20), par émission d'une différence de potentiel entre une cathode en inox disposée dans une deuxième cellule (22) et une anode en zinc consommable, disposée dans une troisième cellule (24);
- Laisser passer les cations de sodium vers la cathode (12), à travers une membrane échangeuse de cations (16), disposée entre les première et deuxième cellules, pour former de la soude avec les ions OH⁻ issus de la dissociation de l'eau;
- Laisser passer les anions de chlore vers l'anode (14) à travers une membrane échangeuse d'anions (18, 18-1, 18-2), disposée entre les première et troisième cellules, pour former un chlorure de Zinc avec les cations de zinc provenant de la dissolution anodique;
- Maintenir le pH de la saumure dans la première cellule (20) entre 6 et 8;
- Maintenir le pH de la troisième cellule (24) à une valeur inférieure au seuil de précipitation du chlorure de zinc formé dans la troisième cellule (24) et donc à une valeur inférieure à 5,5;
- Maintenir la température dans la troisième cellule (24) à une valeur inférieure au seuil de dégagement du chlore gazeux;
- Traiter la saumure de la première cellule (20) par recirculation et passage à travers une résine échangeuse d'ions (20-6) pour la capture des cations de zinc générés à l'anode et ayant pénétré dans la première cellule (20) du fait de la sélectivité non intégrale de la membrane échangeuse d'anions (18, 18-1, 18-2).

2. Procédé de traitement d'une saumure pour produire du chlorure de zinc et de la soude par électro-électrodialyse, selon la revendication 1, **caractérisé en ce que** le pH dans la troisième cellule contenant le chlorure de Zinc est maintenu à une valeur de 4,0.

3. Procédé de traitement d'une saumure pour produire du chlorure de zinc et de la soude par électro-électrodialyse, selon la revendication 1 ou 2, **caractérisé en ce que**, en appliquant une densité de courant de 10A/dm², la température de la troisième cellule contenant le chlorure de Zinc est maintenue à une température inférieure à 63°C.

4. Procédé de traitement d'une saumure pour produire du chlorure de zinc et de la soude par électro-électrodialyse, selon la revendication 3, **caractérisé en ce que** la température de la troisième cellule contenant le chlorure de Zinc est maintenue à une température inférieure 50°C.

5. Procédé de traitement d'une saumure pour produire du chlorure métallique et de la soude par électro-électrodialyse, selon l'une quelconque des revendications précédentes, **caractérisé en ce que** l'on laisse passer les anions de chlore vers l'anode (14) à travers au moins deux membranes échangeuses d'anions (18-1, 18-2), de façon à générer entre la première et troisième cellule une quatrième cellule (26) recevant de la saumure.

6. Dispositif de traitement d'une saumure pour la mise en oeuvre du procédé selon l'une des revendications précédentes, **caractérisé en ce qu'**il comprend :
- Une première cellule (20) destinée à recevoir la saumure;
- Une deuxième cellule (22) destinée à isoler la soude formée dans laquelle est disposée une cathode (12) en inox,
- Une troisième cellule (24) destinée à isoler le chlorure de zinc formé, dans laquelle est disposée une anode (14) en zinc consommable, et
- Une membrane échangeuse de cations (16) disposée entre les première (20) et deuxième (22) cellules, et une membrane échangeuse d'anions (18, 18-1, 18-2) disposée entre les première (20) et troisième (24)cellules.
- Un premier réservoir (20-1) tampon, équipé de moyens de recirculation de la saumure depuis et vers la première cellule (20), et qui comprend des moyens (20-3) agitateur de façon à homogénéiser la concentration de la saumure dans ledit réservoir, et une sonde (20-2) pour mesurer le pH de façon à l'ajuster entre 6 et 8;
- Des moyens de recirculation (20-5) propres au premier réservoir tampon (20-1) qui comprennent une résine échangeuse d'ions (20-6) destinée à éliminer les cations de zinc générés à l'anode (14) et ayant pénétré dans la première cellule (20) du fait de la sélectivité non intégrale de la membrane échangeuse d'anions (18, 18-1, 18-2);
- Un deuxième réservoir (22-1) tampon équipé de moyens de recirculation simple depuis et vers la seconde cellule (22) afin d'en ajuster la concentration.
- Un troisième réservoir (24-1) tampon équipé de moyens de recirculation depuis et vers la troisième cellule (24), et d'un échangeur thermique (24-2) qui permet de maintenir la température dans la deuxième cellule (24) à une valeur inférieure au seuil de dégagement du chlore gazeux, ce troisième réservoir (24-1) tampon comprenant une sonde (24-3) à pH qui permet de contrôler le pH et de maintenir ledit pH dans la fourchette de valeurs adaptées et ajuster le pH à une valeur inférieure à 5,5 dans la troisième cellule (24).

7. Dispositif de traitement d'une saumure selon la revendication 6, **caractérisé en ce qu'**il comprend deux membranes échangeuses d'anions (18,18-1, 18-2) et une quatrième cellule (26), définie par lesdites deux membranes échangeuses d'anions (18-1, 18-2) et donc interposées entre la première cellule (20) destinée à recevoir la saumure et la troisième cellule (24) destinée à isoler le chlorure de zinc, ladite quatrième cellule (26) étant destinée à contenir également de la saumure.

8. Dispositif de traitement d'une saumure selon la revendication 6 ou 7, **caractérisé en ce que** le premier réservoir tampon (20-1) est équipé d'un échangeur thermique (20-4) de façon à maintenir la température de la saumure à une valeur égale à celle de la troisième cellule (24).

## Patentansprüche

1. Verfahren zur Behandlung einer Natriumchlorid enthaltenden Salzlösung zur Herstellung von Zinkchlorid und Natronlauge durch Elektro-Elektrodialyse, **dadurch gekennzeichnet, dass** dieses darin besteht, die folgenden Verfahrensschritte auszuführen:
- Zersetzen des Natriumchlorids der Salzlösung, die in einer ersten Zelle (20) enthalten ist, durch Ausbilden einer Potentialdifferenz zwischen einer Kathode aus rostfreiem Metall, die in einer zweiten Zelle (22) angeordnet ist, und einer aufbrauchbaren Anode aus Zink, die in einer dritten Zelle (24) angeordnet ist;
- Hindurchlassen der Natriumkationen zur Kathode (12) durch eine Kationenaustauschmembran (16) hindurch, die zwischen der ersten und zweiten Zelle angeordnet ist, um mit den OH⁻-Ionen, die aus der Zersetzung des Wassers hervorgegangen sind, Natronlauge zu bilden;
- Hindurchlassen der Chloranionen zur Anode (14) durch eine Anionenaustauschmembran (18, 18-1, 18-2), die zwischen der ersten und dritten Zelle angeordnet ist, um Zinkchlorid mit den Zinkkationen zu bilden, die aus der anodischen Auflösung hervorgehen;
- Halten des pH-Werts der Salzlösung in der ersten Zelle (20) auf einem Wert zwischen 6 und 8;
- Halten des pH-Werts der dritten Zelle (24) auf einem Wert unterhalb der Ausfallschwelle des in der dritten Zelle (24) gebildeten Zinkchlorids und damit auf einem Wert unterhalb von 5,5;
- Halten der Temperatur in der dritten Zelle (24) auf einem Wert unterhalb der Freisetzschwelle von gasförmigem Chlor;
- Behandeln der Salzlösung der ersten Zelle (20) durch Rückführen und Durchlauf durch ein Ionenaustauschnetz (20-6) zum Auffangen von Zinkkationen, die an der Anode erzeugt worden sind und aufgrund der unvollständigen Selektivität der Anionenaustauschmembran (18, 18-1, 18-2) in die erste Zelle (20) gelangt sind.

2. Verfahren zur Behandlung einer Salzlösung zur Herstellung von Zinkchlorid und von Natronlauge durch Elektro-Elektrodialyse nach Anspruch 1, **dadurch gekennzeichnet, dass** der pH-Wert in der dritten Zelle, die Zinkchlorid enthält, auf einem Wert von 4,0 gehalten wird.

3. Verfahren zur Behandlung einer Salzlösung zur Herstellung von Zinkchlorid und von Natronlauge durch Elektro-Elektrodialyse nach Anspruch 1 oder 2, **dadurch gekennzeichnet, dass** beim Anwenden einer Stromdichte von 10A/dm² die Temperatur der dritten Zelle, die Zinkchlorid enthält, auf einer Temperatur unterhalb von 63°C gehalten wird.

4. Verfahren zur Behandlung einer Salzlösung zur Herstellung von Zinkchlorid und von Natronlauge durch Elektro-Elektrodialyse nach Anspruch 3, **dadurch gekennzeichnet, dass** die Temperatur der dritten Zelle, die Zinkchlorid enthält, auf einer Temperatur unterhalb 50°C gehalten wird.

5. Verfahren zur Behandlung einer Salzlösung zur Herstellung von Metallchlorid und von Natronlauge durch Elektro-Elektrodialyse nach einem der vorhergehenden Ansprüche, **dadurch gekennzeichnet, dass** die Chloranionen zur Anode (14) durch wenigstens zwei Anionenaustauschmembranen (18-1, 18-2) hindurchgelassen werden, so dass zwischen der ersten und dritten Zelle eine Salzlösung aufnehmende vierte Zelle (26) gebildet wird.

6. Vorrichtung zur Behandlung einer Salzlösung zur Ausführung eines Verfahrens nach einem der vorhergehenden Ansprüche, **dadurch gekennzeichnet, dass** diese aufweist:
- eine erste Zelle (20), die dazu bestimmt ist, die Salzlösung aufzunehmen;
- eine zweite Zelle (22), die dazu bestimmt ist, die gebildete Natronlauge zu isolieren und in der eine Kathode (12) aus rostfreiem Metall angeordnet ist,
- eine dritte Zelle (24), die dazu bestimmt ist, das gebildete Zinkchlorid zu isolieren, und in der eine aufbrauchbare Anode (14) aus Zink angeordnet ist, und
- eine Kationenaustauschmembran (16), die zwischen der ersten (20) und der zweiten (22) Zelle angeordnet ist und eine Anionenaustauschmembran (18, 18-1, 18-2), die zwischen der ersten (20) und der dritten (24) Zelle angeordnet ist,
- ein erster Pufferspeicher (20-1), der mit Rückführmitteln von und zur ersten Zelle (20) ausgestattet ist und der Betätigungsmittel (20-3) aufweist, um die Konzentration der Salzlösung in dem Speicher zu homogenisieren, und eine Sonde (20-2), um den pH-Wert zu messen, um auf diese Weise diesen auf einen Wert zwischen 6 und 8 einzustellen;
- dem ersten Pufferspeicher (20-1) eigene Rückführmittel (20-5), die ein Ionenaustauschnetz (20-6) aufweisen, das dazu bestimmt ist, die Zinkkationen zu eliminieren, die an der Anode (14) erzeugt worden sind und aufgrund der unvollständigen Selektivität der Anionenaustauschmembran (18, 18-1, 18-2) in die erste Zelle (20) gelangt sind;
- einen zweiten Pufferspeicher (22-1), der mit einfachen Rückführmitteln von und zur zweiten Zelle (22) ausgestattet ist, um darin die Konzentration einzustellen;
- einen dritten Pufferspeicher (24-1), der mit Rückführmitteln von und zur dritten Zelle (24) ausgestattet ist, und mit einem Wärmetauscher (24-2), der es gestattet, die Temperatur in der zweiten Zelle (24) auf einem Wert unterhalb der Freisetzschwelle von gasförmigem Chlor zu halten, wobei der dritte Pufferspeicher (24-1) eine pH-Sonde (24-3) aufweist, die es gestattet, den pH-Wert zu überwachen und den pH-Wert in einem Bereich angepasster fester Werte zu halten und den pH-Wert in der dritten Zelle (24) auf einen Wert unterhalb von 5,5 einzustellen.

7. Vorrichtung zur Behandlung einer Salzlösung nach Anspruch 6, **dadurch gekennzeichnet, dass** diese zwei Anionenaustauschmembrane (18, 18-1, 18-2) und eine vierte Zelle (26) aufweist, die von den beiden Anionenaustauschmembranen (18-1, 18-2) gebildet ist und folglich zwischen der ersten Zelle (20), die zur Aufnahme der Salzlösung bestimmt ist, und der dritten Zelle (24) angeordnet ist, die dazu bestimmt ist, das Zinkchlorid zu isolieren, wobei die vierte Zelle (26) dazu bestimmt ist, ebenfalls Salzlösungen aufzunehmen.

8. Vorrichtung zur Behandlung einer Salzlösung nach Anspruch 6 oder 7, **dadurch gekennzeichnet, dass** der erste Pufferspeicher (20-1) mit einem Wärmetauscher (20-4) ausgestattet ist, um auf diese Weise die Temperatur der Salzlösung auf einem Wert gleich demjenigen der dritten Zelle (24) zu halten.

## Claims

1. A method for treating a brine comprising sodium chloride for producing zinc chloride and soda by electro-electrodialysis, **characterised in that** it comprises performing the following steps:
- dissociating the sodium chloride from said brine contained in a first cell (20), by emitting a potential difference between a stainless-steel cathode disposed in a second cell (22) and an anode made from consumable zinc disposed in a third cell (24);
- allowing the sodium cations to pass to the cathode (12), through a cation exchange membrane (16) disposed between the first and second cells, to form soda with the OH⁻ ions issuing from the dissociation of the water;
- allowing the chlorine anions to pass to the anode (14) through an anion exchange membrane (18, 18-1, 18-2) disposed between the first and third cells, in order to form a zinc chloride with the zinc cations coming from the anodic dissolution;
- maintaining the pH of the brine in the first cell (20) at between 6 and 8;
- maintaining the pH of the third cell (24) at a value below the threshold of precipitation of the zinc chloride formed in the third cell (24) and therefore at a value below 5.5;
- maintaining the temperature in the third cell (24) at a value below the threshold of release of gaseous chlorine;
- treating the brine in the first cell (20) by recirculation and passage through an ion exchange resin (20-6) for capture of the zinc cations that were generated at the anode and that entered the first cell (20) because of the non-integral selectivity of the anion exchange membrane (18, 18-1, 18-2).

2. A method for treating a brine to produce zinc chloride and soda by electro-electrodialysis, according to claim 1,
**characterised in that** the pH in the third cell containing the zinc chloride is maintained at a value of 4.0.

3. A method for treating a brine for producing zinc chloride and soda by electro-electrodialysis, according to claim 1 or 2,
**characterised in that**, by applying a current density of 10A/dm², the temperature of the third cell containing the zinc chloride is maintained at a temperature below 63°C.

4. A method for treating a brine for producing zinc chloride and soda by electro-electrodialysis, according to claim 3,
**characterised in that** the temperature of the third cell containing the zinc chloride is maintained at a temperature below 50°C.

5. A method for treating a brine for producing metallic chloride and soda by electro-electrodialysis, according to any of the preceding claims, **characterised in that** the chlorine anions are allowed to pass to the anode (14) through at least two anion exchange membranes (18-1, 18-2), so as to generate, between the first and third cells, a fourth cell (26) receiving brine.

6. A device for treating a brine for implementing the method according to any of the preceding claims, **characterised in that** it comprises:
- a first cell (20) intended to receive the brine;
- a second cell (22) intended to isolate the soda formed, in which a stainless-steel cathode (12) is disposed,
- a third cell (24) intended to isolate the zinc chloride formed, in which an anode (14) made from consumable zinc is disposed, and
- a cation exchange membrane (16) disposed between the first (20) and second (22) cells, and an anion exchange membrane (18, 18-1, 18-2) disposed between the first (20) and third (24) cells,
- a first buffer reservoir (20-1), equipped with means for recirculating brine from and to the first cell (20), and which comprises agitating means (20-3) so as to homogenise the concentration of the brine in said reservoir, and a sensor (20-2) for measuring the pH so as to adjust it to between 6 and 8;
- recirculation means (20-5) particular to the first buffer reservoir (20-1), which comprise an ion exchange resin (20-6) intended to eliminate the zinc cations that were generated at the anode (14) and that entered the first cell (20) because of the non-integral selectivity of the anion exchange membrane (18, 18-1, 18-2),
- a second buffer reservoir (22-1) equipped with simple means of recirculation from and to the second cell (22) in order to adjust the concentration thereof,
- a third buffer reservoir (24-1) equipped with means for recirculation from and to the third cell (24), and with a heat exchanger (24-2) that makes it possible to maintain the temperature in the second cell (24) at a value below the threshold of release of gaseous chlorine, this third buffer reservoir (24-1) comprising a pH sensor (24-3) that makes it possible to control the pH and to maintain said pH in the suitable range of values and to adjust the pH to a value below 5.5 in the third cell (24).

7. A device for treating a brine according to claim 6,
**characterised in that** it comprises two anion exchange membranes (18, 18-1, 18-2) and a fourth cell (26), defined by said two anion exchange membranes (18-1, 18-2) and therefore interposed between the first cell (20) intended to receive the brine and the third cell (24) intended to isolate the zinc chloride, said fourth cell (26) being intended to also contain brine.

8. A device for treating a brine according to claim 6 or 7,
**characterised in that** the first buffer reservoir (20-1) is equipped with a heat exchanger (20-4) so as to maintain the temperature of the brine at a value equal to that of the third cell (24).
